# EUROPEAN PATENT SPECIFICATION

(11) **EP 3 506 571 B1**
(45) Date of publication and mention of the grant of the patent: **02.02.2022**
(21) Application number: 18215573.9
(22) Date of filing: 21.12.2018
(51) Int. Cl.: H04L 12/58, H04L 29/06

(54) **SYSTEM AND METHOD FOR REGISTERING AN ELECTRONIC MOBILE DEVICE TO A SERVER AND AUTOMATIC PROCESS OF DIGITAL MAIL ROOM**
SYSTEM UND VERFAHREN ZUM REGISTRIEREN EINES ELEKTRONISCHEN MOBILGERÄTS FÜR EINEN SERVER UND AUTOMATISCHEN VERFAHREN EINES DIGITALEN POSTRAUMS
SYSTÈME ET PROCÉDÉ D'ENREGISTREMENT D'UN DISPOSITIF MOBILE ÉLECTRONIQUE SUR UN SERVEUR ET PROCESSUS AUTOMATIQUE D'UNE SALLE DE COURRIER NUMÉRIQUE

(30) Priority: 27.12.2017 IT 201700149959
(43) Date of publication of application: 03.07.2019
(73) Proprietor: Multicerta S.r.l., 43126 Parma (IT)
(72) Inventor: CURRELI, Antonello, 43123 Parma (IT); SICILIA, Riccardo, 43014 Medesano PR (IT); SORACCHI, Andrea, 43043 Borgo Val Di Taro PR (IT)
(74) Representative: Dondi, Silvia

(56) References cited:
- WO-A1-2007/071040
- US-A1- 2005 198 170
- US-A1- 2006 053 280
- US-A1- 2008 065 878
- PETRUCCI DIGITPA F GENNAI A SHAHIN ISTI-CNR A VINCIARELLI C: "La Posta Elettronica Certificata - Italian Certified Electronic Mail; rfc6109.txt", LA POSTA ELETTRONICA CERTIFICATA - ITALIAN CERTIFIED ELECTRONIC MAIL; RFC6109.TXT, INTERNET ENGINEERING TASK FORCE, IETF; STANDARD, INTERNET SOCIETY (ISOC) 4, RUE DES FALAISES CH- 1205 GENEVA, SWITZERLAND, 5 April 2011 (2011-04-05), pages 1-65, XP015075949,
- Liga Bizune: "How to build email list with QR codes? - Email Marketing Blog | Email Marketing Tips & News| Mailigen", mailigen blog, 20 September 2011 (2011-09-20), XP055504795, Retrieved from the Internet: URL:https://www.mailigen.com/blog/how-to-b uild-email-list-with-qr-codes/ [retrieved on 2018-09-05]

## Description

The present invention relates to a system and a method for registering an electronic mobile device to a server and an automatic digital mailroom process.

The invention proposed herein can be applied in the massive mailroom sector in which it is necessary to manage the sending of large quantities of correspondence. The invention is of interest in various private or public environments: e.g. apartment building administrators, associations, public administration, bodies, etc.

In particular, within the context of the management of a plurality of apartment buildings by one administrator it is necessary to ensure that the communications (e.g. convocations or meeting minutes) are effectively delivered to the recipients i.e. to the various occupants.

For that purpose, the communication methods usable to date (that fulfil legal requirements) are:
- delivery by hand
- sending a letter by registered mail with acknowledgement of receipt
- sending by fax
- sending by certified email (generally indicated in Italian with the acronym "PEC").

Both hand delivery and sending a letter by registered mail with acknowledgement of receipt are now considered obsolete methods, as they are not adapted to the digitalization of archives, as well as being expensive in terms of cost and time.

The use of fax and PEC, on the other hand, although certifying successful delivery - respectively through the fax sending report and through a return email to the sender's address - are not able to guarantee to the administrator that the individual recipients are effectively aware of the message delivered.

Above all, they are tools that are not at the disposal of everybody. It is quite unlikely that the individual occupants (or more generally private citizens) have the availability of a fax machine or have their own certified email account.

In summary, the use of fax or PEC is at the risk of being contested by the recipient.

New solutions have recently been developed, including the one described in Italian patent no. 1392733. Although it digitalizes some steps, the system and method described therein always imply resorting to the transmission of paper-based registered mail. Therefore, it is a hybrid solution, as it is based on a flow of digital data combined with paper-based transmission of a registered letter through the postal service.

From document US 2008/065878 it is known a method and system for encrypted message transmission.

In this context, the technical task underpinning the present invention is to disclose a system and a method for registering an electronic mobile device to a server and an automatic digital mailroom process that obviate the above-cited drawbacks of the prior art.

In particular, it is an object of the present invention to make available an automated digital mailroom process that is completely digital, i.e. that does not require the transmission of any paper documentation, unless optionally.

Another object of the present invention is to make available an automated digital mailroom process that is easy to use also for private citizens. Another object of the present invention is to make available an automated digital mailroom process that is cheaper, more reliable and quicker than known processes.

The technical task set and the objects specified are substantially attained by a system for registering an electronic mobile device to a server, in particular for use in a digital mailroom process, said system comprising:
- a graphic interface loadable on said electronic mobile device and configured to create and access at least one profile UA of a user, which contains identifying data of the user such as, for example, a phone number and/or email address;
- a first software module residing on the electronic mobile device and configured to generate a public key and a private key univocally associated with the profile of the user;
- a second software module residing on the server and configured to generate a public key and a private key univocally associated with the server;
- a first computing unit housed in the server and configured to:
   - receive the public key associated with the profile of the user and the identifying data of the profile of the user from the electronic mobile device;
   - run an encoding algorithm configured to generate an encrypted message containing the public key of the server and using the public key associated with the profile of the user as the encoding key;
   - transmit the encrypted message to the electronic mobile device;
- a second computing unit housed in the electronic mobile device and configured to:
   - transmit the public key associated with the profile of the user and the identifying data of the profile of the user to the server;
   - receive the encrypted message from the server;
   - run a decoding algorithm configured to decode the encrypted message by using the private key associated with the profile of the user.

In accordance with one embodiment, the user's profile also contains a user name and/or password.

Preferably, the encoding algorithm is an asymmetric cryptography algorithm, for example of the PGP type.

The defined technical task and the specified objects are substantially reached by a method for registering an electronic mobile device to a server, comprising the steps of:
- creating at least one profile of a user of the electronic mobile device, said profile containing identifying data of the user;
- generating a public key and a private key univocally associated with the profile of the user;
- generating a public key and a private key univocally associated with the server;
- transmitting the public key associated with the profile of the user and the identifying data of the profile of the user from the electronic mobile device to the server;
- encrypting the public key of the server through the public key associated with the profile of the user so as to generate an encrypted message containing the public key of the server;
- transmitting the encrypted message from the server to the electronic mobile device;
- decoding the encrypted message arrived at the electronic mobile device by using the private key associated with the profile of the user.

In particular, the step of creating the profile of the user takes place prior to the steps of generating the public and private keys.

The stated technical task and specified objects are substantially achieved by an automated digital mailroom process using the system according to the present invention, comprising the steps of:
- transmitting a digital communication from a sender to the server of the system, said digital communication containing at least one message and a list of recipients to which the same number of profiles correspond;
- for each recipient of the list, checking whether the public key associated with his/her profile is stored on the server and if so performing the following steps:
   - associating a safety token with the received digital communication;
   - creating a first digital package containing at least the safety token;
   - encrypting the first digital package by means of the public key associated with the profile of the recipient in such a way as to generate a first digital encrypted package containing the first digital package;
   - transmitting the first digital encrypted package from the server to the electronic mobile device of the system;
   - decoding the first digital package arrived at the electronic mobile device by means of the private key associated with the profile of the recipient.

In accordance with one embodiment, after decoding the first encrypted digital package, the following steps are carried out:
- encrypting again the safety token by means of the public key of the server so as to generate an encrypted safety token;
- transmitting the encrypted safety token from the electronic mobile device to the server;
- decoding the encrypted safety token already arrived at the server using the private key associated with the server;
- creating a second digital package containing the message of said digital communication;
- encrypting the second digital package by means of the public key associated with the profile of the recipient in such a way as to generate a second digital encrypted package containing the second digital package;
- transmitting the second digital encrypted package from the server to the electronic mobile device;
- decoding the second digital package arrived at the electronic mobile device by means of the private key associated with the profile of the recipient.

Further characteristics and advantages of the present invention will become more apparent from the approximate and thus non-limiting description of a preferred, but not exclusive, embodiment of a system and a method for registering an electronic mobile device to a server and an automatic digital mailroom process, as illustrated in the accompanying drawings, in which:

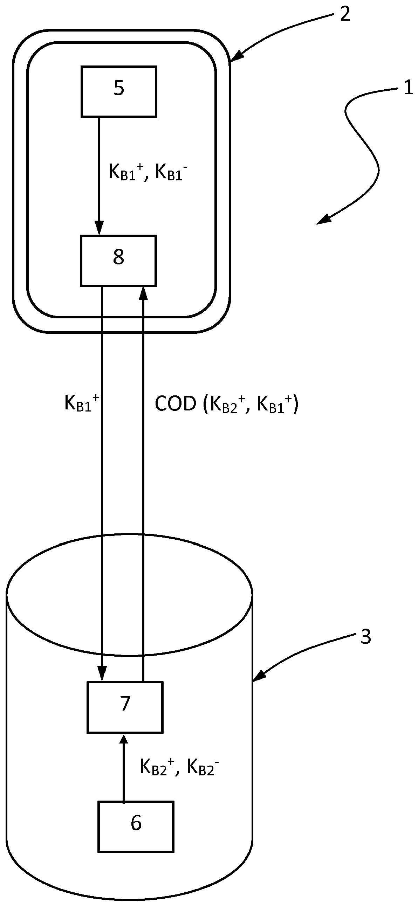

- figure 1 schematically illustrates a system for registering an electronic mobile device to a server, according to the present invention;
- figures 2 and 3 schematically illustrate some steps of an automatic digital mailroom process, according to the present invention.

With reference to the figures, number 1 is used to indicate a system for registering an electronic mobile device 2 to a server 3, particularly for use in a digital mailroom process.

The electronic mobile device 2 (hereinafter referred to in short as "mobile device") may be for example a mobile telephone, a smartphone, a tablet or a smartwatch.

The communication between the mobile device 2 and the server 3 takes place by means of a wireless network of the known type.

On the screen of the mobile device 2 a graphic interface for access by one or more users may be loaded.

In particular, the graphic interface is configured to create at least one profile UA ("user account") of a user containing at least one identifying datum of the user, e.g. a phone number and/or an email address. Preferably, the user's profile UA also contains a user name and/or password.

The graphic interface is configured to enable each already registered user, i.e. for whom a profile UA already exists, to access the system 1.

For the sake of conciseness, it is assumed below that the mobile device 2 corresponds to a single user who accesses the graphic interface by entering the credentials of his/her profile UA.

However, it is possible to create a plurality of profiles UA, each of which is associated with a user of the mobile device 2. Think about the case in which various members of the same family access the same tablet to receive communications reserved for them.

The system 1 comprises:
- a first software module 5 residing on the mobile device 2 and configured to generate a public key KB₁⁺ and a private key KB₁⁻univocally associated with the profile UA of the user;
- a second software module 6 residing on the server 3 and configured to generate a public key KB₂⁺ and a private key KB₂⁻ univocally associated with the server 3.

A first computing unit 7 is housed in the server 3, which is configured to:
- receive the public key KB₁⁺ associated with the profile of the user UA and the identifying data of the profile UA of the user from the mobile device 2;
- run an encoding algorithm configured to generate an encrypted message COD containing the public key KB₂⁺ of the server 3 and using the public key KB₁⁺ associated with the profile of the user UA as the encoding key;
- transmit the encrypted message COD to the mobile device 2.

A second computing unit 8 is housed in the mobile device 2, which is configured to:
- transmit the public key KB₁⁺ associated with the profile UA of the user and the identifying data of the profile UA of the user to the server 3;
- receive the encrypted message COD from the server 3;
- run a decryption algorithm configured to decode the encrypted message COD by using the private key KB₁⁻ associated with the profile UA of the user.

The encoding algorithm run by the first computing unit 7 is any "asymmetric cryptography" algorithm, e.g. of the PGP ("Pretty Good Privacy") type, i.e. based on the use of a pair of keys generated so that it is impossible to obtain one from the other.

In cryptography, the two keys are indicated by the expressions "public key" and "private key". The former is used to encode and the latter to decode.

A sender who needs to transmit a message to a recipient can encode the message with the public key of the recipient, which has been previously communicated to him/her. Once the recipient has received the encoded message, he/she will decode it with his/her private key.

The decoding can therefore only take place by the recipient who possesses the private key, which must therefore be kept secret.

In this context, the terms "encode" and "encrypt" are synonyms. Likewise, the terms "decode" and "decrypt" are also synonyms.

The encrypted message COD is symbolically indicated as:

COD (KB₂⁺, KB₁⁺)

where KB₂⁺ is the original non-encrypted message (in this case it is the public key of the server 3) and KB₁⁺ is the encoding key (in this case the public key associated with the user UA of the mobile device 2).

According to one embodiment, the first software module 5 is a portion of software code which is run by the second computing unit 8.

According to one embodiment, the second software module 6 is a portion of software code which is run by the first computing unit 7.

Both the first and the second computing unit 7, 8 may consist of an electronic module, duly programmed to perform the functions described, which may correspond to different hardware and/or routine software entities belonging to the programmed module.

Alternatively, or in addition, such functions can be performed by a plurality of distributed electronic modules.

Such processing units 7, 8 can further avail themselves of one or more processors for executing instructions contained in memory modules.

The method of registering the mobile device to the server is described below.

First of all, through the graphic interface loaded onto the screen of the mobile device 2, the user creates his/her profile UA, by entering at least one identifying datum, such as a telephone number and/or an email address.

Preferably, the graphic interface asks the user to enter also a user name and/or password.

Once the data have been entered, the user receives, by SMS and/or email, confirmation of the successful creation of the profile UA, with an indication of the credentials.

After the creation of the profile UA, the first software module 5 generates the public key KB₁⁺ and the private key KB₁⁻ univocally associated with the profile UA of the user.

On the server 3 side, the second software module 6 generates the public key KB₂⁺ and the private key KB₂⁻ univocally associated with the server 3. The mobile device 2 transmits the public key KB₁⁺ associated with the profile UA of the user and the identifying data of the profile UA of the user to the server 3.

On the server 3 side, the encoding algorithm is run which generates the encrypted message COD containing the public key KB₂⁺ of the server 3 and using the public key KB₁⁺ associated with the profile of the user UA as the encoding key.

The server 3 then transmits the encrypted message COD to the mobile device 2 which decodes it using the private key KB₁⁻ associated with the profile UA of the user.

At the end of the method described, the server 3 knows the public key KB₁⁺ associated with the profile UA of the user of the mobile device 2, and the mobile device 2 knows the public key KB₂⁺ of the server 3.

In particular, the public keys KB₁⁺ associated with the profiles UA of the same number of users are stored on the server 3, together with (at least) the identifying data of such profiles UA.

Likewise, the public key KB₂⁺ of the server 3 is stored on the mobile device 2.

Only if the exchange of keys takes place successfully is it possible to perform an automatic digital mailroom process, i.e. a process of sending communications from the server 3 to the mobile device 2.

Before starting the actual mailroom process, the profile UA of the user is associated with at least one membership group. Such association takes place by acquiring through the mobile device 2 an identifying code of the membership group.

Preferably, the identifying code is a QR code or a bar code that can be acquired through a photo camera integrated into the mobile device 2. Alternatively, the identifying code is an alphanumerical code, e.g. a fiscal code, which can be entered by the user through a graphic interface.

The identifying code of the membership group is transmitted from the mobile device 2 to an apparatus that manages the membership group.

The management apparatus, after receiving the request from the profile UA of the user, will evaluate whether such request is acceptable, e.g. by searching for the identifying data of the profile UA within a previously stored list of users.

In the event of acceptance, the management apparatus will send confirmation to the mobile device 2 through standard means, e.g. SMS or email.

Each profile UA of the user can be associated with more than one membership group. In that case, for each membership group the process described above must be carried out.

The following example relates to an apartment block wherein:
- "membership group" means an apartment block;
- "management apparatus of the membership group" means a server or a computer, which is also the "sender" of the mailroom service, indicated with the letter M;
- "user" or "recipient" of the mailroom service means the individual occupant.

The actual mailroom process begins with the transmission of a digital communication CD from the sender M to the server 3.

The digital communication CD sent to the server 3 contains at least one message Mex (e.g. text or html) and a list of recipients to whom the same number of profiles UA correspond. Preferably, the digital communication CD also contains the subject of the message, one or more attachments and other optional parameters such as for example: date and start and/or end time of an event (e.g. apartment block meeting), deadline date and time of an event (e.g. deadline for the payment of an instalment of the apartment block service charge), univocal code associated with an event, short description of an event, etc.

For each recipient, the email address is preferably specified and, more preferably, also the geographic address.

The server 3 confirms to the sender M the successful receipt of the digital communication CD. The time in which such confirmation is communicated to the sender M is indicated as the acceptance time t1.

For each recipient of the list, the server 3 verifies whether it is in possession of the public key KB₁⁺ associated with his/her profile UA.

At this point, two scenarios are distinguished:
1) the public key KB₁⁺ associated with the profile UA of the recipient is stored on the server 3;
2) the public key KB₁⁺ associated with the profile UA of the recipient is not stored on the server 3.

According to the first scenario, the server 3 associates a safety token T with the digital communication CD received.

Preferably, the safety token T is associated with some fields of the digital communication CD, such as the subject of the message and optional parameters.

Safety token T means an alphanumerical string univocally associated with such digital communication CD. For example, the safety token T has 64/128 characters.

The server 3 therefore creates a first digital package containing at least the safety token T and preferably one or more fields of the digital communication CD.

The first digital package is encrypted by the server 3 using the public key KB₁⁺ associated with the profile UA of the recipient so as to generate a first digital encrypted package COD_PD1.

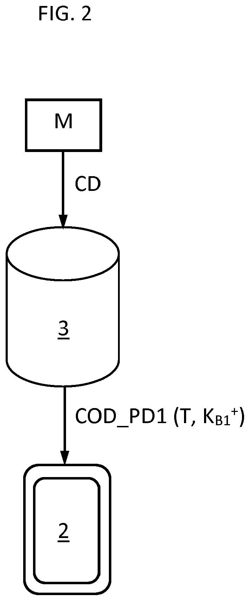

In figure 2, the first digital encrypted package is symbolically indicated as COD_PD1 (T, KB₁⁺), where the contents thereof are represented in this case only by the safety token T and the encoding key is the public key KB₁⁺ associated with the profile UA of the recipient.

Preferably, the first digital encrypted package COD_PD1 is signed by the server 3.

The first digital encrypted package COD_PD1 (and preferably signed) is sent to the recipient, in particular to a mobile device 2 of the recipient. The sending time of the first digital encrypted package COD_PD1 is indicated as the sending time t2.

Preferably, the server 3 also sends to the mobile device 2 a simple email in which it notifies the sending of the first digital encrypted package COD_PD1.

The mobile device 2 checks the signature and decrypts the first digital encrypted package COD_PD1 through the private key KB₁⁻ associated with the profile UA of the recipient.

At this point, the recipient can view the subject and optional parameters contained in the first digital encrypted package COD_PD1, being able to decide also whether to download the message Mex and the attachments or whether to postpone such activity to a later time.

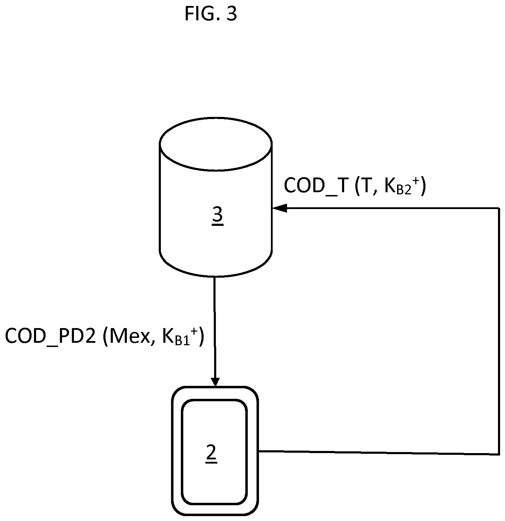

When the recipient decides to access the message Mex and the attachments, the process proceeds as described below, with reference to figure 3.

The mobile device 2 encrypts again the safety token T (preferably signed with the private key KB₁⁻ of the mobile device 2) using the public key KB₂⁺ of the server 3 so as to generate an encrypted safety token COD_T.

The encrypted safety token COD_T is transmitted by the mobile device 2 to the server 3.

In this way, the mobile device 2 confirms to the server 3 successful receipt of the first digital encrypted package COD_PD1. The time in which such confirmation is communicated to the server 3 (which is the time in which the server 3 receives the encrypted safety token COD_T) is indicated as the delivery notification time t3.

After receiving the encrypted safety token COD_T, the server 3 decrypts it by means of its private key KB₂₋.

The server 3 now prepares a second digital package containing the message Mex of the digital communication CD and as many further digital packages as the number of attachments to the digital communication CD. The second digital package is encrypted by the server 3 using the public key KB₁⁺ associated with the profile UA of the recipient so as to generate a second digital encrypted package COD_PD2.

In figure 3, the second digital encrypted package is symbolically indicated as COD_PD2 (Mex, KB₁⁺), where the contents thereof are represented in this case only by the message Mex and the encoding key is the public key KB₁⁺ associated with the profile UA of the recipient.

Preferably, the second digital encrypted package COD_PD2 is signed by the server 3.

The second digital encrypted package COD_PD2 (and preferably signed) is sent to the recipient, in particular to a mobile device 2 of the recipient. The mobile device 2 checks the signature and decrypts the second digital encrypted package COD_PD2 through the private key KB₁⁻ associated with the profile UA of the recipient.

Analogous steps are repeated for the further digital packages (not illustrated), related to the attachments.

The delivery time, indicated with t4, is the time at which all the documents are downloaded by the recipient.

Optionally, after downloading all the documents, a link is sent to the email address of the recipient which allows access to a web page of the server 3 containing the digital communication CD. The date and time of access to such web page can optionally be stored in the server 3.

If it is not possible to determine the delivery notification time t3, the contents of the digital communication CD are transmitted by registered mail with acknowledgement of receipt.

According to the second scenario, the server 3 associates a safety token T with the digital communication CD received.

Preferably, the safety token T is associated with some fields of the digital communication CD, such as the subject of the message and optional parameters.

For example, the safety token T has 64 characters.

Like in the first scenario, also in this case a first digital package is created containing at least the safety token T and preferably one or more fields of the digital communication CD.

The first digital package is sent to the email address of the recipient.

The sending time of the first digital package is indicated as the sending time t2.

In this case, the delivery notification time t3 is the time at which the server SMTP of the recipient receives the email containing the first digital package.

The email also contains a link that allows access to a web page of the server 3 containing the digital communication CD, therefore the recipient can access the message Mex and the attachments.

The delivery time t4 in this case is the time of access to such web page by the recipient.

If it is not possible to determine the delivery time t4, the contents of the digital communication CD are transmitted by registered mail with acknowledgement of receipt.

The characteristics of the system and method for registering an electronic mobile device to a server and the automatic digital mailroom process, according to the present invention, emerge clearly from the above description, as do the advantages.

In particular, the proposed invention can be used for digital mailroom for any recipient, even a private citizen (e.g. occupant) as it is based on the use of electronic mobile devices, now widely used, communicating with a server that centralizes the sending of massive communications.

The proposed solution can be applied in a completely digital automatic mailroom process, i.e. not requiring any paper documentation transmission step (except in the case of failure of the digital transmission).

The proposed solution is cheap, reliable and quick.

## Claims

1. Automatic process of digital mailroom for sending communications from a server (3) to a mobile device (2) of a system (1), the system (1) comprising:
- a graphic interface loadable on said mobile device (2) and configured to create and access to at least a user account (UA) of a user, said user account (UA) containing identifying data of the user;
- a first software module (5) residing on the mobile device (2) and configured to generate a public key (KB₁⁺) and a private key (KB₁⁻) univocally associated to the user account (UA) of the user;
- a second software module (6) residing on the server (3) and configured to generate a public key (KB₂⁺) and a private key (KB₂⁻) univocally associated to said server (3);
- a first computing unit (7) housed in the server (3) and configured to:
• receive the public key (KB₁⁺) associated to the user account (UA) of the user and the identifying data of the user account (UA) of the user from said mobile device (2);
• carry out an encryption algorithm configured to generate an encrypted message (COD) containing the public key (KB₂⁺) of the server (3) and using the public key (KB₁⁺) associated to the user account (UA) of the user as encrypting key;
• transmit the encrypted message (COD) to the mobile device (2);
- a second computing unit (8) housed in the mobile device (2) and configured to:
• transmit the public key (KB₁⁺) associated to the user account (UA) of the user and the identifying data of the user account (UA) of the user to the server (3);
• receive the encrypted message (COD) from the server (3);
• carry out a decryption algorithm configured to decrypt the encrypted message (COD) by using the private key (KB₁⁻) associated to the user account (UA) of the user,
said process comprising the steps of:
associating the user account (UA) with at least one membership group by acquiring through the mobile device (2) an identifying code of the membership group by: transmitting the identifying code of the membership group from the mobile device (2) to a management apparatus that manages the membership group (M); and
after receiving the request from the user account (UA), evaluating by said management apparatus (M) whether said request is acceptable by searching for the identifying data received by the management apparatus (M) in a previously stored list of users and, in that event, sending a confirmation by the management apparatus (M) to the mobile device (2); transmitting a digital communication (CD) from the management apparatus (M) to the server (3), said digital communication (CD) containing at least a message (Mex) and a list of recipients having corresponding user accounts (UA);
for each recipient of the list, checking if the public key (KB₁⁺) associated to its user account (UA) is saved on the server (3) and if so, carrying out the following steps:
- associating a safety token (T) to the received digital communication (CD);
- creating a first digital package containing at least the safety token (T);
- encrypting the first digital package by means of the public key (KB₁⁺) associated to the user account (UA) of the recipient in such a way as to generate a first digital encrypted package (COD_PD1) containing the first digital package;
- transmitting the first digital encrypted package (COD_PD1) from the server (3) to the mobile device (2);
- decrypting the first digital encrypted package (COD_PD1) arrived at the mobile device (2) by means of the private key (KB₁⁻) associated to the user account (UA) of the recipient;
after having decrypted the first digital encrypted package (COD_PD1) the process comprising the following steps:
- encrypting again the safety token (T) by means of the public key (KB₂⁺) of the server (3) in such a way as to generate an encrypted safety token (COD_T);
- transmitting the encrypted safety token (COD_T) from the mobile device (2) to the server (3);
- decrypting the encrypted safety token (COD_T) arrived to the server (3) by means of the private key (KB₂⁻) associated to the server (3);
- creating a second digital package containing the message (Mex) of said digital communication (CD);
- encrypting the second digital package by means of the public key (KB₁⁺) associated to the user account (UA) of the recipient in such a way as to generate a second digital encrypted package (COD_PD2) containing the second digital package;
- transmitting the second digital encrypted package (COD_PD2) from the server (3) to the mobile device (2);
- decrypting the second digital encrypted package (COD_PD2) arrived to the mobile device (2) by means of the private key (KB₁⁻) associated to the user account (UA) of the recipient.

2. Automatic process according to anyone of the preceding claims, wherein said identifying data of the user is a phone number and/or an email address.

3. Automatic process according to anyone of the preceding claims, wherein said user account (UA) also contains a user name.

4. Automatic process according to anyone of the preceding claims, wherein said user account (UA) also contains a password.

5. Automatic process according to anyone of the claims 2 to 4, wherein said encryption algorithm is of the PGP type.

## Patentansprüche

1. Automatisches Verfahren eines digitalen Postraums zum Senden von Mitteilungen von einem Server (3) an ein Mobilgerät (2) eines Systems (1), wobei das System (1) umfasst:
- eine grafische Schnittstelle, die auf das Mobilgerät (2) geladen werden kann und konfiguriert ist, um mindestens ein Benutzerkonto (UA) eines Benutzers zu erstellen und darauf zuzugreifen, wobei das Benutzerkonto (UA) Identifizierungsdaten des Benutzers enthält;
- ein erstes Softwaremodul (5), das sich auf dem Mobilgerät (2) befindet und konfiguriert ist, um einen öffentlichen Schlüssel (KB₁⁺) und einen privaten Schlüssel (KB₁⁻) zu erzeugen, die eindeutig dem Benutzerkonto (UA) des Benutzers zugeordnet sind;
- ein zweites Softwaremodul (6), das sich auf dem Server (3) befindet und konfiguriert ist, um einen öffentlichen Schlüssel (KB₂⁺) und einen privaten Schlüssel (KB₂⁻) zu erzeugen, die eindeutig dem Server (3) zugeordnet sind;
- eine erste Recheneinheit (7), die im Server (3) untergebracht ist und konfiguriert ist, um:
• den öffentlichen Schlüssel (KB₁⁺), der dem Benutzerkonto (UA) des Benutzers zugeordnet ist, und die Identifizierungsdaten des Benutzerkontos (UA) des Benutzers vom Mobilgerät (2) zu empfangen;
• einen Verschlüsselungsalgorithmus auszuführen, der so konfiguriert ist, dass er eine verschlüsselte Nachricht (COD) erzeugt, die den öffentlichen Schlüssel (KB₂⁺) des Servers (3) enthält und den öffentlichen Schlüssel (KB₁⁺), der dem Benutzerkonto (UA) des Benutzers zugeordnet ist, als Verschlüsselungsschlüssel verwendet;
• die verschlüsselte Nachricht (COD) an das Mobilgerät (2) zu übertragen;
- eine zweite Recheneinheit (8), die im Mobilgerät (2) untergebracht und konfiguriert ist, um:
• den öffentlichen Schlüssel (KB₁⁺), der dem Benutzerkonto (UA) des Benutzers zugeordnet ist, und die Identifizierungsdaten des Benutzerkontos (UA) des Benutzers an den Server (3) zu übertragen;
• die verschlüsselte Nachricht (COD) vom Mobilgerät (3) zu empfangen;
• einen Entschlüsselungsalgorithmus auszuführen, der so konfiguriert ist, dass er die verschlüsselte Nachricht (COD) unter Verwendung des privaten Schlüssels (KB₁⁻), der dem Benutzerkonto (UA) des Benutzers zugeordnet ist, entschlüsselt,
wobei das Verfahren die Schritte umfasst: Zuordnen des Benutzerkontos (UA) mit mindestens einer Mitgliedschaftsgruppe durch Erlangen eines Identifizierungscodes der Mitgliedschaftsgruppe über das Mobilgerät (2) durch:
Übertragen des Identifizierungscodes der Mitgliedschaftsgruppe vom Mobilgerät (2) an eine Verwaltungsvorrichtung, die die Mitgliedschaftsgruppe (M) verwaltet; und
nach Empfangen der Anfrage vom Benutzerkonto (UA), Bewerten durch die Verwaltungsvorrichtung (M), ob die Anfrage akzeptabel ist, indem es nach den von der Verwaltungsvorrichtung (M) empfangenen Identifizierungsdaten in einer zuvor gespeicherten Liste von Benutzern gesucht wird und in diesem Fall Senden einer Bestätigung durch die Verwaltungsvorrichtung (M) an das Mobilgerät (2);
Übertragen einer digitalen Kommunikation (CD) von der Verwaltungsvorrichtung (M) an den Server (3), wobei die digitale Kommunikation (CD) mindestens eine Nachricht (Mex) und eine Liste von Empfängern mit entsprechenden Benutzerkonten (UA) enthält;
für einen jeden Empfänger der Liste prüfen, ob der öffentliche Schlüssel (KB₁⁺), der mit seinem Benutzerkonto (UA) zugeordnet ist, auf dem Server (3) gespeichert ist und wenn ja, werden folgende Schritte ausgeführt:
- Zuordnen eines Sicherheitstokens (T) zu der empfangenen digitalen Kommunikation (CD);
- Erstellen eines ersten digitalen Pakets, das mindestens den Sicherheitstoken (T) enthält;
- Verschlüsseln des ersten digitalen Pakets mittels des öffentlichen Schlüssels (KB₁⁺), der dem Benutzerkonto (UA) des Empfängers so zugeordnet ist, dass ein erstes digital verschlüsseltes Paket (COD_PD1) erzeugt wird, das das erste digitale Paket enthält;
- Übertragen des ersten digital verschlüsselten Pakets (COD_PD1) vom Server (3) an das Mobilgerät (2);
- Entschlüsseln des ersten digital verschlüsselten Pakets (COD_PD1), das auf dem Mobilgerät (2) angekommen ist, mittels des privaten Schlüssels (KB₁⁻), der dem Benutzerkonto (UA) des Empfängers zugeordnet ist; nachdem das erste digital verschlüsselte Paket (COD_PD1) entschlüsselt wurde, umfasst das Verfahren die folgenden Schritte:
- erneutes Verschlüsseln des Sicherheitstokens (T) mittels des öffentlichen Schlüssels (KB₂⁺) des Servers (3), sodass ein verschlüsseltes Sicherheitstoken (COD_T) erzeugt wird;
- Übertragen des verschlüsselten Sicherheitstokens (COD_T) vom Mobilgerät (2) an den Server (3);
- Entschlüsseln des beim Server (3) angekommenen verschlüsselten Sicherheitstokens (COD_T) mittels des privaten Schlüssels (KB₂⁻), der dem Server (3) zugeordnet ist;
- Erstellen eines zweiten digitalen Pakets, das die Nachricht (Mex) der digitalen Kommunikation (CD) enthält;
- Verschlüsseln des zweiten digitalen Pakets mittels des öffentlichen Schlüssels (KB₁⁺), der dem Benutzerkonto (UA) des Empfängers so zugeordnet ist, dass ein zweites digital verschlüsseltes Paket (COD_PD2) erzeugt wird, das das zweite digitale Paket enthält;
- Übertragen des zweiten digital verschlüsselten Pakets (COD_PD2) vom Server (3) an das Mobilgerät (2);
- Entschlüsseln des zweiten digital verschlüsselten Pakets (COD_PD2), das auf dem Mobilgerät (2) angekommen ist, mittels des privaten Schlüssels (KB₁⁻), der dem Benutzerkonto (UA) des Empfängers zugeordnet ist.

2. Automatisches Verfahren nach einem der vorhergehenden Ansprüche, wobei die Identifizierungsdaten des Benutzers eine Telefonnummer und/oder eine E-Mail-Adresse sind.

3. Automatisches Verfahren nach einem der vorhergehenden Ansprüche, wobei das Benutzerkonto (UA) auch einen Benutzernamen enthält.

4. Automatisches Verfahren nach einem der vorhergehenden Ansprüche, wobei das Benutzerkonto (UA) auch ein Passwort enthält.

5. Automatisches Verfahren nach einem der Ansprüche 2 bis 4, wobei der Verschlüsselungsalgorithmus vom PGP-Typ ist.

## Revendications

1. Processus automatique d'une salle de courrier numérique servant à envoyer des communications d'un serveur (3) à un dispositif mobile (2) d'un système (1), le système (1) comprenant :
- une interface graphique pouvant être chargée sur ledit dispositif mobile (2) et configurée pour créer et accéder à au moins un compte utilisateur (UA) d'un utilisateur, ledit compte utilisateur (UA) contenant des données d'identification de l'utilisateur ;
- un premier module logiciel (5) résidant sur le dispositif mobile (2) et configuré pour générer une clé publique (KB₁⁺) et une clé privée (KB₁⁻) associées de manière univoque au compte utilisateur (UA) de l'utilisateur ;
- un second module logiciel (6) résidant sur le serveur (3) et configuré pour générer une clé publique (KB₂⁺) et une clé privée (KB₂⁻) associées de manière univoque audit serveur (3) ;
- une première unité de calcul (7) logée dans le serveur (3) et configurée pour :
• recevoir la clé publique (KB1₊) associée au compte utilisateur (UA) de l'utilisateur et les données d'identification du compte utilisateur (UA) de l'utilisateur à partir dudit dispositif mobile (2) ;
• exécuter un algorithme de chiffrement configuré pour générer un message chiffré (COD) contenant la clé publique (KB₂⁺) du serveur (3) et utilisant la clé publique (KB₁⁺) associée au compte utilisateur (UA) de l'utilisateur comme clé de chiffrement ;
• transmettre le message chiffré (COD) au dispositif mobile (2) ;
- une seconde unité de calcul (8) logée dans le dispositif mobile (2) et configurée pour :
• transmettre la clé publique (KB₁⁺) associée au compte utilisateur (UA) de l'utilisateur et les données d'identification du compte utilisateur (UA) de l'utilisateur au serveur (3) ;
• recevoir le message chiffré (COD) du serveur (3) ;
• exécuter un algorithme de déchiffrement configuré pour déchiffrer le message chiffré (COD) en utilisant la clé privée (KB₁⁻) associée au compte utilisateur (UA) de l'utilisateur,
ledit processus comprenant les étapes de :
associer le compte utilisateur (UA) à au moins un groupe d'appartenance en acquérant par l'intermédiaire du dispositif mobile (2) un code d'identification du groupe d'appartenance en :
transmettant le code d'identification du groupe d'appartenance du dispositif mobile (2) à un appareil de gestion qui gère le groupe d'appartenance (M) ; et
après réception de la demande du compte utilisateur (UA), évaluer par ledit appareil de gestion (M) si ladite demande est acceptable en recherchant les données d'identification reçues par l'appareil de gestion (M) dans une liste d'utilisateurs précédemment stockée et, dans ce cas, envoyer une confirmation par l'appareil de gestion (M) au dispositif mobile (2) ;
transmettre une communication numérique (CD) de l'appareil de gestion (M) au serveur (3), ladite communication numérique (CD) contenant au moins un message (Mex) et une liste de destinataires ayant des comptes utilisateur correspondants (UA) ;
pour chaque destinataire de la liste, vérifier si la clé publique (KB₁⁺) associée à son compte utilisateur (UA) est sauvegardée sur le serveur (3) et si c'est le cas, effectuer les étapes suivantes :
- associer un jeton d'authentification (T) à la communication numérique (CD) reçue ;
- créer un premier paquet numérique contenant au moins le jeton d'authentification (T) ;
- chiffrer le premier paquet numérique au moyen de la clé publique (KB₁⁺) associée au compte utilisateur (UA) du destinataire de manière à générer un premier paquet numérique chiffré (COD_PD1) contenant le premier paquet numérique ;
- transmettre le premier paquet numérique chiffré (COD_PD1) du serveur (3) au dispositif mobile (2) ;
- déchiffrer le premier paquet numérique chiffré (COD_PD1) arrivé au dispositif mobile (2) au moyen de la clé privée (KB₁⁻) associée au compte utilisateur (UA) du destinataire ;
après avoir déchiffré le premier paquet numérique chiffré (COD_PD1), le processus comprenant les étapes suivantes :
- chiffrer à nouveau le jeton d'authentification (T) au moyen de la clé publique (KB₂⁺) du serveur (3) de manière à générer un jeton d'authentification chiffré (COD_T) ;
- transmettre le jeton d'authentification chiffré (COD_T) du dispositif mobile (2) au serveur (3) ;
- déchiffrer le jeton d'authentification chiffré (COD_T) arrivé au serveur (3) au moyen de la clé privée (KB₂⁻) associée au serveur (3) ;
- créer un second paquet numérique contenant le message (Mex) de ladite communication numérique (CD) ;
- chiffrer le second paquet numérique au moyen de la clé publique (KB₁⁺) associée au compte utilisateur (UA) du destinataire de manière à générer un second paquet numérique chiffré (COD_PD2) contenant le second paquet numérique ;
- transmettre le second paquet numérique chiffré (COD_PD2) du serveur (3) au dispositif mobile (2) ;
- déchiffrer le second paquet numérique chiffré (COD_PD2) arrivé sur le dispositif mobile (2) au moyen de la clé privée (KB₁⁻) associée au compte utilisateur (UA) du destinataire.

2. Processus automatique selon l'une quelconque des revendications précédentes, dans lequel lesdites données d'identification de l'utilisateur sont un numéro de téléphone et/ou une adresse électronique.

3. Processus automatique selon l'une quelconque des revendications précédentes, dans lequel ledit compte utilisateur (UA) contient également un nom d'utilisateur.

4. Processus automatique selon l'une quelconque des revendications précédentes, dans lequel ledit compte utilisateur (UA) contient également un mot de passe.

5. Processus automatique selon l'une quelconque des revendications 2 à 4, dans lequel ledit algorithme de chiffrement est de type PGP.
